# EUROPEAN PATENT SPECIFICATION

(11) **EP 3 957 152 B1**
(45) Date of publication and mention of the grant of the patent: **16.04.2025**
(21) Application number: 21173954.5
(22) Date of filing: 14.05.2021
(51) Int. Cl.: A01D 34/66

(54) **RIDING GRASS MOWER**
AUFSITZRASENMÄHER
TONDEUSE AUTOPORTÉE

(30) Priority: 18.08.2020 JP 2020138058; 24.08.2020 JP 2020140917
(43) Date of publication of application: 23.02.2022
(73) Proprietor: Kubota Corporation, Osaka-shi, Osaka 556-8601 (JP)
(72) Inventor: NAKATSU, Ryotaro, SAKAI-SHI, OSAKA, 5900823 (JP); KAGO, Tatsuki, SAKAI-SHI, OSAKA, 5900823 (JP); KUMASHIRO, Takashi, SAKAI-SHI, OSAKA, 5900823 (JP); YAMASHITA, Nobuyuki, SAKAI-SHI, OSAKA, 5900823 (JP); SATO, Seiya, SAKAI-SHI, OSAKA, 5900823 (JP)
(74) Representative: Cabinet Beau de Loménie

(56) References cited:
- CN-A- 110 696 958
- JP-A- 2020 058 288
- US-A1- 2004 244 348
- US-A1- 2019 008 090
- ANONYMOUS: "Riding Mower Toolbox - MowerBoss", 13 February 2015 (2015-02-13), pages 1 - 4, XP055890548, Retrieved from the Internet <URL:https://mowerboss.com/info/riding-mower-toolbox/> [retrieved on 20220211]

## Description

### FIELD OF THE INVENTION

For example, in riding grass mowers disclosed in JP 2008-278820A and JP 2010-252741A, a rear discharge type of mower device for mowing lawn and weeds can be arranged in a state of being located in a space between front wheels and back wheels in a front-back direction. In this type of riding grass mower, cut grass is ejected backward from the mower device through a space between left and right back wheels, and is stored in a high-dump or low-dump grass collection container. A structure in which cut grass is ejected backward through the space between the left and right back wheels and stored in a high-dump or low-dump grass collection container is useful in terms of ease of efficiently collecting the cut grass. However, when such a high-dump or low-dump grass collection container is not provided, or a traveling chassis is used in a state where the grass collection container is removed therefrom, the space between the left and right back wheels that is used to transport cut grass is wasted. The present invention is for providing a riding grass mower in which the space between the left and right back wheels below the chassis can be used more efficiently.

For example, a riding grass mower described in JP 2018-134054A includes a self-propelled chassis equipped with a pair of left and right front wheels and a pair of left and right back wheels. A mower device is provided between the front and back wheels of the self-propelled chassis. The mower device includes a discharge opening formed at a back portion of a housing, and cut grass is discharged backward of the self-propelled chassis from the discharge opening. In this type of riding grass mower, cut grass mowed by the mower device is discharged backward from the mower device, but if the discharged cut grass disperses backward from a space between the left and right back wheels, the cut grass disperses over a wide area behind the chassis. For this reason, there is a need for prevention of such dispersing. The present invention provides a riding grass mower that includes a rear discharge type of mower device and can be operated while preventing cut grass from dispersing backward of the chassis.

Non-patent literature document Anonymous: "Riding Mower Toolbox - MowerBoss," 13 February 2015 (2015-02-13), pages 1-4, XP55890548, retrieved from the internet: https://mowerboss.com/info/riding-mower-toolbox/ discloses a composite box having a locking lid and capable of being attached to a platform mounted to a riding mower. Chinese Patent Application Publication No. CN110696958A discloses a riding type electric tool, which enables loads of a front wheel and a rear wheel to be uniformly distributed by arranging a battery assembly in the riding type electric tool. United States Patent Application Publication No. US2019008090A1 discloses turf vehicles such as riding lawn mowers and, more particularly, to accessory attachment systems for use with the same.

### SUMMARY OF THE INVENTION

A riding grass mower according to claim 1 is provided.

According to the present invention, a space that is behind the mower device and between the pair of left and right back wheels can be effectively used as a space for arranging the toolbox.

In the above configuration, it is preferable that the toolbox is located between a pair of left and right main frames that constitute the chassis frame, and is supported so as to be attachable to and removable from the duct member.

According to this configuration, the toolbox can be rigidly held by the pair of left and right main frames, and deformation or the like of the toolbox due to contact with other objects can be easily inhibited by the rigid main frames.

In the above configuration, it is preferable that the toolbox includes a closable opening on a chassis back side, and a lid for closing the closable opening, and that the lid can be opened and closed from the chassis back side.

According to this configuration, an operator can easily perform operations to open and close the toolbox from the chassis back side, in a state of having alighted from the chassis.

The riding grass mower according to the present configuration may include a cover for covering a space between the left back wheel and the right back wheel from behind the back wheels.

According to the present configuration, any cut grass discharged backward from the mower device that would disperse backward from the space between the left and right back wheels is received by the cover. Thus, a mowing operation can be performed while preventing cut grass from dispersing backward of the chassis.

In the present invention, it is preferable that, in a back view of the traveling chassis, the cover spans between a traveling-chassis laterally-outer end portion of the left back wheel and a traveling-chassis laterally-outer end portion of the right back wheel.

According to this configuration, since the cover overlaps the left and right back wheels in a back view of the traveling chassis, it is possible to accurately prevent cut grass from dispersing backward of the chassis. In addition, even if sand or the like is bounced up by the back wheels, the sand that is bounced up is received by the cover. Thus, the cover is used as a fender for the back wheels, and the sand or the like bounced up by the back wheels can be prevented from entering a boarding driving portion.

It is preferable that the riding grass mower of the present invention further comprises a ROPS (rollover protection system) provided behind a driver seat, on the traveling chassis, and that the cover is supported by the ROPS.

According to the present configuration, the ROPS is used as a support member that is provided between the cover and the traveling chassis such that the cover is supported by the traveling chassis. For this reason, the support structure for supporting the cover with the traveling chassis is simplified, and no special support member is needed.

It is preferable that the riding grass mower of the present invention further comprises a pair of left and right vertical support portions provided in the ROPS and parallel to an up-down direction of the traveling chassis, and that the cover is supported by the pair of left and right vertical support portions.

According to the present configuration, two lateral sides of the cover are supported by the vertical support portions that have an excellent strength. For this reason, the cover can be firmly supported while employing a simple structure as the support structure for the cover by using the ROPS as the support member for supporting the cover with the traveling chassis.

In the present invention, it is preferable that the cover has a pivot axis in a direction parallel to a horizontal width direction of the traveling chassis, and is configured to enter a cover state of covering the space from behind the back wheels as a result of being swung upward with the pivot axis serving as a swing fulcrum, and enters a table state where an article can be placed on the cover as a result of being swung downward toward a chassis back side with respect to the cover state with the pivot axis serving as a swing fulcrum.

According to the present configuration, since the cover serves as a table by making the cover into the table state, when, for example, an operation to inspect the traveling chassis is performed, tools or the like can be placed on the cover in the table state, making it easy to perform the operation without preparing any special table member.

The present invention may further include the toolbox being provided between the pair of left and right back wheels forward of the cover.

According to the present configuration, tools or the like can be stored in the toolbox. Thus, when, for example, an operation to inspect the traveling chassis is performed, there is no need to carry the tools or the like.

### BRIEF DESCRIPTION OF THE DRAWINGS

FIG. 1 is an overall side view of a riding grass mower.
FIG. 2 is an overall plan view of the riding grass mower.
FIG. 3 is a back view of the riding grass mower.
FIG. 4 is an exploded perspective view that shows a structure for attaching a toolbox to the riding grass mower.
FIG. 5 is a left side view of the entire riding grass mower.
FIG. 6 is a plan view that shows the entire riding grass mower.
FIG. 7 is a back view of the cover in a cover state.
FIG. 8 is a perspective view that shows the cover in a removed state.
FIG. 9 is a perspective view that shows the toolbox in the removed state.
FIG. 10 is a cross-sectional view that shows the cover in the cover state and the toolbox in a closed state.
FIG. 11 is a cross-sectional view that shows the cover in a table state and the tool box in an open state.
FIG. 12 is a back view that shows the cover according to a variation.
FIG. 13 is a cross-sectional view of FIG. 12 taken along arrows XIII-XIII.

### DETAILED DESCRIPTION OF PREFERRED EMBODIMENTS

Hereinafter, modes for carrying out the present invention will be described with reference to the drawings.

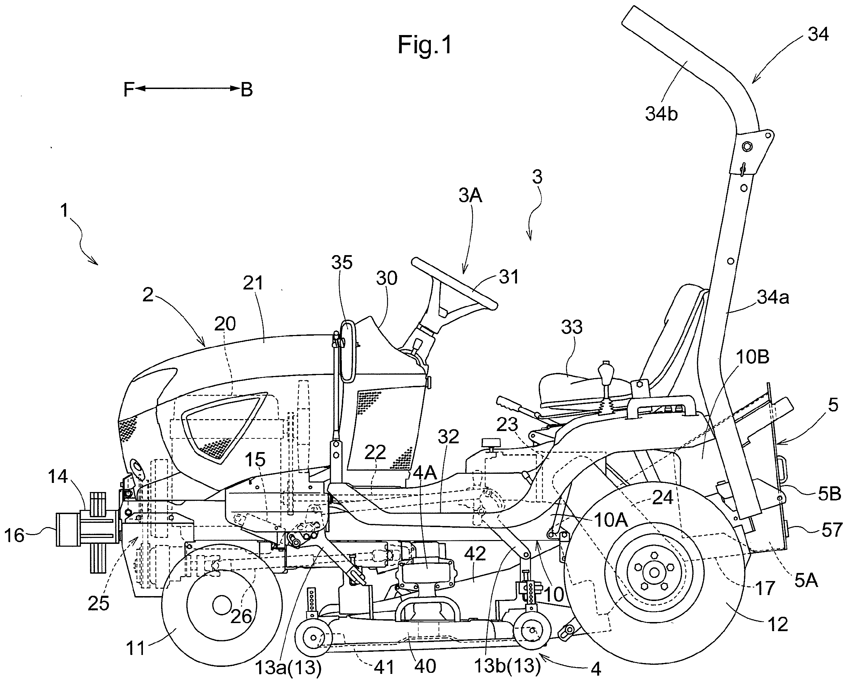

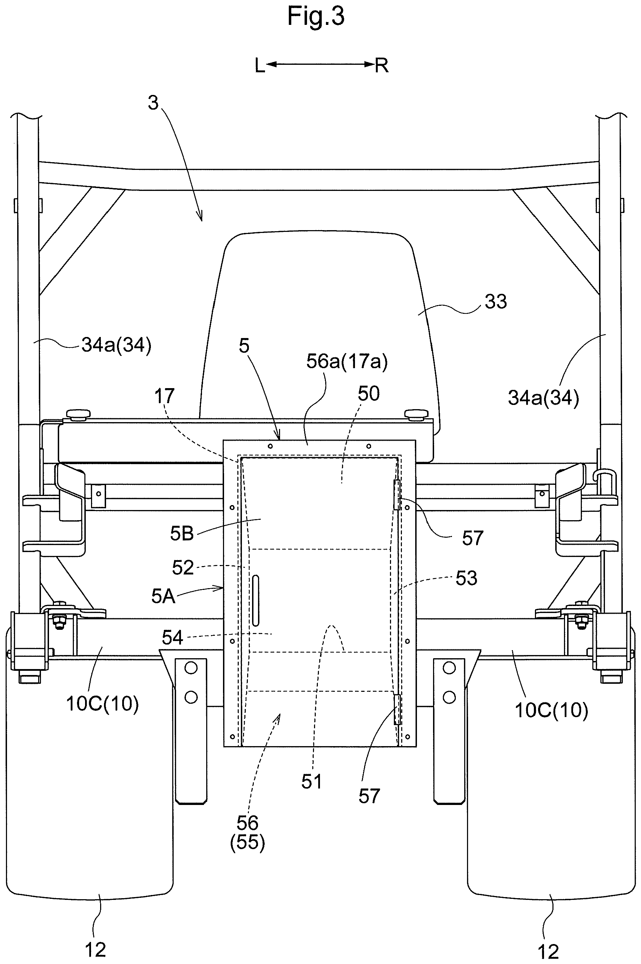

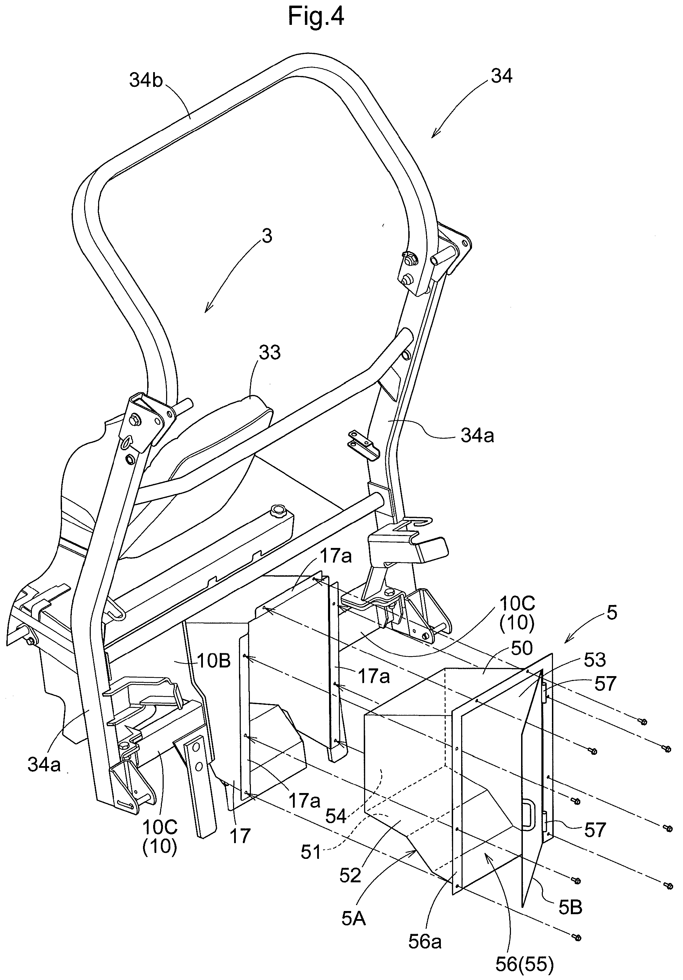

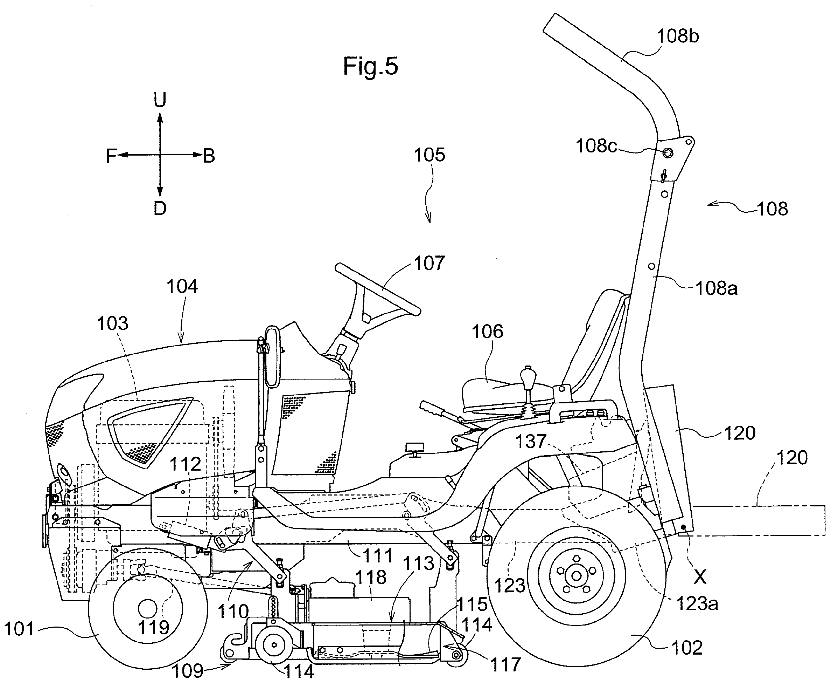

The direction denoted by a sign (F) with an arrow in the drawings indicates a chassis front side, and the direction denoted by a sign (B) with an arrow in the drawings indicates a chassis back side. The direction denoted by a sign (L) with an arrow in the diagrams indicates a chassis left side, and the direction denoted by a sign (R) with an arrow in the diagrams indicates a chassis right side. The direction denoted by a sign (U) with an arrow in the diagrams indicates a chassis upper side, and the direction denoted by a sign (D) with an arrow in the diagrams indicates a chassis lower side. In the following, the first embodiment will be described with reference to FIGS. 1 to 4, and the second embodiment will be described with reference to FIGS. 5 to 13.

### Overall Configuration of Riding Grass Mower According to First Embodiment

FIG. 1 shows an overall side view of a riding grass mower serving as an example of a work machine. This riding grass mower has a self-propelled configuration including a pair of left and right steerable front wheels 11 on the front side of a chassis frame 10 of a traveling chassis 1, and including a pair of left and right drivable back wheels 12 on the back side.

A rear discharge type of mower device 4 is attached in a suspended manner so as to be capable of being raised and lowered, at a location between the front wheels 11 and the back wheels 12 in the front-rear direction underneath the chassis frame 10.

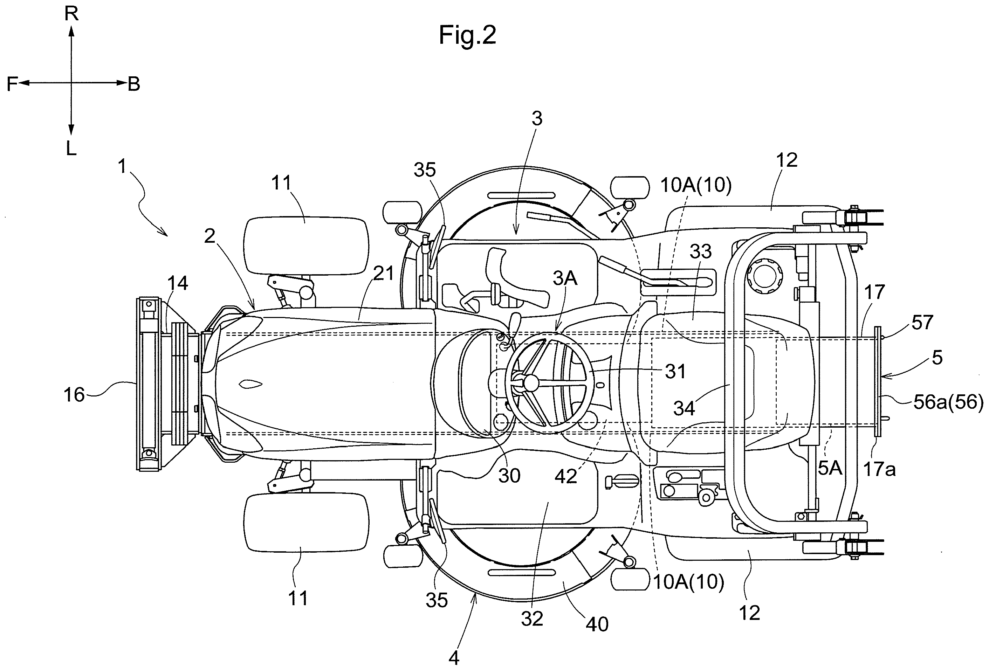

As shown in FIGS. 1 and 2, a prime mover portion 2 is provided in the front portion above the chassis frame 10 of the traveling chassis 1, and a boarding driving portion 3 is provided behind the prime mover portion 2.

In the prime mover portion 2, an engine 20 is mounted to the chassis frame 10 in a state of being enclosed under an engine bonnet 21. Motive power extracted from the back side of the engine 20 is input to a transmission case 23 at a backward position via a main transmission shaft 22, and the motive power that has been subjected to a speed change in the transmission case 23 is output to, for example, a driving system for the back wheels 12.

In this configuration, motive power for work can be extracted from the front side of the engine 20. Specifically, a motive power extraction mechanism 25 constituted by a belt transmission mechanism is provided on the front side of the engine 20, and motive power from the engine 20 is transmitted to a drive portion 4A of the mower device 4 via a PTO shaft 26 provided in the motive power extraction mechanism 25.

The boarding driving portion 3 behind the prime mover portion 2 is provided with a steering portion 3A that includes a steering wheel 31, a steering panel 30 that is continuous with the back side of the engine bonnet 21, and the like. A driver seat 33 is disposed behind the steering portion 3A, at a position above a boarding step 32 located at foot level, and a ROPS 34 is provided upright behind the driver seat 33. The ROPS 34 has an upside-down U shape in a front view, and includes left and right columnar leg portions 34a having lower end sides that are coupled and fixed to the back end portion of the chassis frame 10. The upper end portion sides of the left and right columnar leg portions 34a are connected to each other by an upside-down U-shaped upper frame 34b, thus covering the region above the driver seat 33. A fender mirror 35 is provided upright at a front end portion of the upper surface of the boarding step 32.

The chassis frame 10 includes a pair of left and right main frames 10A that are elongated in the front-back direction over the substantially entire length of the traveling chassis 1, and a ROPS base 10B is integrally fixed to back end portions of the main frames 10A. The ROPS base 10B includes a horizontal member 10C that is bolted to outer side surfaces of the main frames 10A and protrudes laterally outward. These main frames 10A and the ROPS base 10B constitute the chassis frame 10.

The lower end sides of left and right columnar leg portions 34a are coupled and fixed to protruding ends of the horizontal member 10C of the ROPS base 10B. The upside-down U-shaped upper frame 34b is coupled to the upper end portion sides of the left and right columnar leg portions 34a.

A guard frame 16, which serves as a protection member for the chassis front portion, is provided in a front portion of the chassis frame 10. The guard frame 16 is provided with a balance weight attachment portion 14 to which a plurality of balance weights can be attached.

### Mower Device According to First Embodiment

The mower device 4 includes a blade housing 40 that is supported in a suspended manner so as to be capable of being raised and lowered relative to the chassis frame 10 via a link mechanism 13 that includes a pair of one front link 13a and one back link 13b on each of the left and right sides. Mower lift cylinders 15 are coupled to upper end portions of the front links 13a of the link mechanism 13. The vertical height position of the blade housing 40 relative to the chassis frame 10 can be changed by extension and retraction of the mower lift cylinders 15.

The drive portion 4A, to which motive power transmitted from the PTO shaft 26 is input, is provided at an upper portion of the blade housing 40. Although not shown in the diagrams, a gear interlocking mechanism for divergently transmitting the motive power transmitted from the PTO shaft 26 to the left and right rotating blades 41 is enclosed within the drive portion 4A.

A pair of left and right rotating blades 41 are arranged in the blade housing 40. The rotating blades 41 rotate about respective vertical axes and mow grass and the like by being driven to rotate at an equal speed with portions of the rotation paths thereof overlapped with each other. In this configuration, the cut grass is discharged backward from a cut grass discharge opening 42, which is formed at a back portion of the blade housing 40 by conveying air produced by rotational motion of the rotating blades 41.

A duct member 17 is attached to surfaces of back end portions of the main frames 10A on the opposite side to the side on which the ROPS base 10B is attached, i.e., chassis-inward surfaces. Accordingly, the duct member 17 is located between the pair of left and right main frames 10A (between the pair of left and right back wheels 12), and is located behind the cut grass discharge opening 42 of the mower device 4 and faces diagonally backward and upward so as to be capable of guiding cut grass discharged from the mower device 4 backward and upward when necessary. The cross-sectional shape of the duct member 17 is a channel shape that is open downward, and the duct member 17 is attached so as to span from a position behind the cut grass discharge opening 42 of the mower device 4 to the back end of the ROPS base 10B.

### Toolbox According to First Embodiment

This riding grass mower is provided with a toolbox 5 behind the mower device 4, at a position between the pair of left and right back wheels 12. The toolbox 5 includes a main body 5A and a lid 5B, and is formed to have a rectangular box shape as a whole. As shown in FIG. 1, the toolbox 5 is arranged at a position backward of and away from the cut grass discharge opening 42 of the mower device 4. By thus arranging the toolbox 5 away from the cut grass discharge opening 42, consideration is given to not prevent the discharging of cut grass from the cut grass discharge opening 42.

The main body 5A includes an upper surface 50, a lower surface 51, a left side surface 52, a right side surface 53, a front surface 54, and a back surface 55. Of these, the upper surface 50 and the left and right side surfaces 52 and 53 are provided in a state of being inscribed in inner surfaces of the channel-shaped duct member 17. The upper surface 50 is formed to have an inclined surface that extends along an upper wall of the duct member 17 and is raised backward. The lower surface 51 is formed to have an almost horizontal surface or a slightly backward inclined surface, moving backward away from the upper surface 50. Accordingly, the entire shape of the main body 5A and the toolbox 5 is necessarily a tapered shape with the vertical width being narrower on the front side and becoming wider on the back side in a side view.

The front surface 54 is formed to have a surface parallel to the up-down direction, but the front surface 54 may alternatively be in a forward inclined orientation in which the upper side thereof is located more forward such that cut grass discharged from the cut grass discharge opening 42 in the front of the front surface 54 is guided downward. The back surface 55 is a closable opening 56 that is open backward of the chassis. The closable opening 56 has a lower edge located at a height position close to a lower edge of the front surface 54, and an upper edge located at a height position higher than an upper edge of the front surface 54, and is formed to have an elongated rectangular shape. A peripheral flange 56a is provided at the periphery of the closable opening 56.

The back surface 55 is equipped with the lid 5B with which the closable opening 56 can be opened and closed. The lid 5B is formed to have substantially the same shape as the peripheral flange 56a of the closable opening 56, and is pivotably supported by hinge members 57 provided on the peripheral flange 56a. Thus, the lid 5B can be swung to be opened and closed to the left and right sides in the horizontal direction around an axis in the up-down direction of the hinge members 57. Operations to open and close the lid 5B make it possible to switch between a closed state of the toolbox 5 with the closable opening 56 closed and an open state of the toolbox 5 with the closable opening 56 open.

The peripheral flange 56a is integrally formed on an upper portion and on left and right sides of the toolbox 5 on the side outward of the periphery of the closable opening 56. The duct member 17 also has an end portion flange 17a that is integrally formed on an upper portion and on left and right sides of a back end portion of the duct member 17. The toolbox 5 can be supported so as to be capable of being attached to and removed from the chassis frame 10 via the duct member 17 by bolting the peripheral flange 56a of the toolbox 5 to the end portion flange 17a of the duct member 17 while overlapping the peripheral flange 56a with the end portion flange 17a from the back side.

### Variations of First Embodiment

(1-1) The first embodiment has described an example in which the entire shape of the toolbox 5 is a tapered rectangular box shape in a side view, but the invention is not necessarily be limited to this structure, and any shape can be employed as the entire shape of the toolbox 5. For other configurations, the same configurations as those of the above-described first embodiment may be employed.

(1-2) The first embodiment has described, as an example, a structure in which the closable opening 56 is provided in the back surface 55 of the main body 5A of the toolbox 5, and the lid 5B with which the closable opening 56 can be opened and closed in the left-right direction is provided as a means for opening and closing the closable opening 56. However, the invention is not necessarily limited to this structure. For example, it is possible to employ a structure in which the lower edge side of the closable opening 56 of the toolbox 5 is pivotably supported such that the lower edge side of the closable opening 56 can be swung up and down to open and close the closable opening 56, or a structure in which a shutter (not shown) that opposes the closable opening 56 along the back surface 55 can be slid in the up-down direction or the left-right direction to be opened and closed. Alternatively, a structure may be employed in which a drawer-shaped box (not shown) is inserted into the closable opening 56 such that the closable opening 56 can be opened and closed by pulling the box in and out. For other configurations, the same configurations as those of the above-described first embodiment may be employed.

The first embodiment of the present invention is as described above. The second embodiment of the present invention will be described below with reference to FIGS. 5 to 13.

### Overall Configuration of Riding Grass Mower According to Second Embodiment

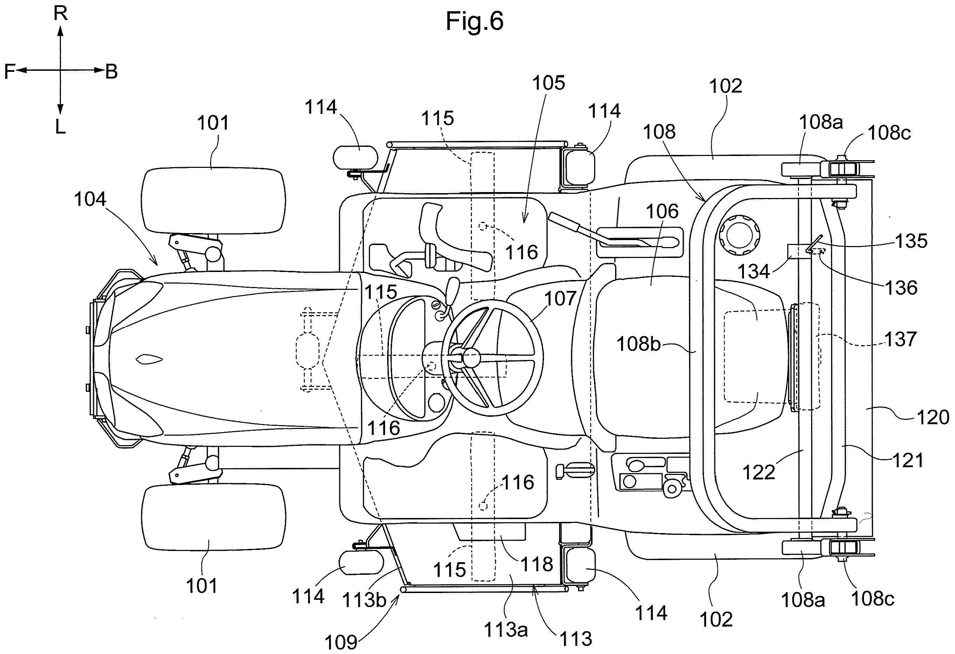

As shown in FIGS. 5 and 6, a riding grass mower includes a traveling chassis supported by a pair of left and right front wheels 101 and a pair of left and right back wheels 102. The pair of left and right front wheels 101 is supported so as to be steerable, and the pair of left and right back wheels 102 is supported so as to be drivable. A prime mover portion 104 having an engine 103 is formed in a front portion of the traveling chassis. A driving portion 105 is formed in a back portion of the traveling chassis. The driving portion 105 includes a driver seat 106 and a steering wheel 107 for steering the front wheels 101. A ROPS 108 is provided behind the driver seat 106. A mower device 109 for mowing grass or lawn grass is provided between the front wheels 101 and the back wheels 102. The mower device 109 is supported by a chassis frame 111 via link mechanisms 110, and is raised and lowered between a lowered work state and a raised non-work state relative to the traveling chassis as a result of the link mechanisms 110 being swung up and down by extension and retraction of lift cylinders 112.

### Configuration of Mowing Device According to Second Embodiment

The mower device 109 is configured as a rear discharge type and discharges cut grass or lawn backward of the chassis. Specifically, as shown in FIGS. 5 and 6, the mower device 109 includes a blade housing 113. The blade housing 113 includes a top plate 113a and side plates 113b. The side plates 113b extend downward from a peripheral portion of the top plate 113a. A pair of left and right ground gauge wheels 114 is supported on the front outer side of the blade housing 113. Three rotating blades 115 are provided within the blade housing 113, and the three rotating blades 115 are arranged in the horizontal width direction of the traveling chassis. The three rotating blades 115 are rotatably supported on the top plate 113a via rotating support shafts 116 parallel to the up-down direction of the blade housing 113. A discharge opening 117 from which cut grass can be discharged backward of the chassis is provided behind the blade housing 113.

A blade drive case 118 is provided on the upper surface side of the blade housing 113. The blade drive case 118 houses a belt transmission mechanism (not shown) that transmits motive power input from the engine 103 via a rotating shaft 119 (see FIG. 5) or the like to the rotating support shafts 116 of the three rotating blades 115.

In the mower device 109, motive power input to the blade drive case 118 is transmitted to upper portions of the rotating support shafts 116 of the three rotating blades 115, the rotating support shafts 116 are driven, the three rotating blades 115 are driven to rotate around respective rotation centers that are axes of the rotating support shafts 116 in the up-down direction of the rotating blade housing, and grass or lawn grass is mowed by the three rotating blades 115. Cut grass is discharged backward of the chassis from the discharge opening 117 by discharging air generated by the rotation of the rotating blades 115.

### Configuration of Cover According to Second Embodiment

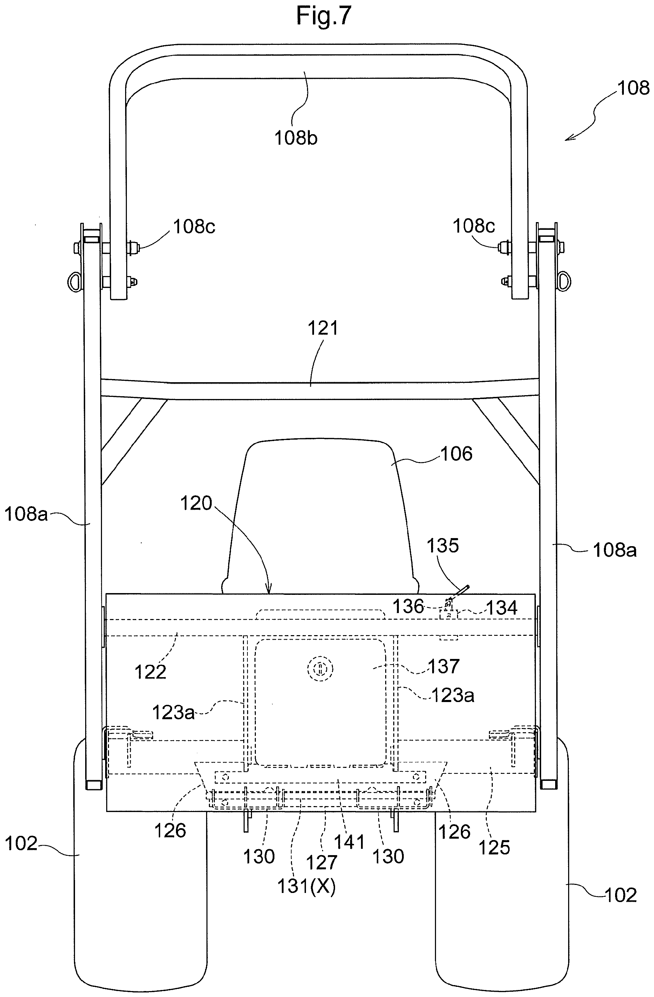

As shown in FIGS. 5, 6, and 7, a cover 120 that covers a space between the left and right back wheels 102 from behind the back wheels 102 is provided behind the traveling chassis. Dispersing of cut grass discharged from the mower device 109 in a backward-upward direction from the space between the back wheels is prevented by the cover 120. As shown in FIG. 7, the cover 120 is provided spanning between a chassis laterally outer end portion of the left back wheel 102 and a chassis laterally outer end portion of the right back wheel 102 in a back view of the traveling chassis. In a back view of the traveling chassis, the cover 120 overlaps the left and right back wheels 102, and is used as a back wheel fender for preventing sand or the like bounced up by the back wheels 102 from entering the driving portion 105.

The cover 120 is supported by the ROPS 108. The ROPS 108 is used as a support member that is provided between the cover 120 and the traveling chassis so as to support the cover 120 with the traveling chassis.

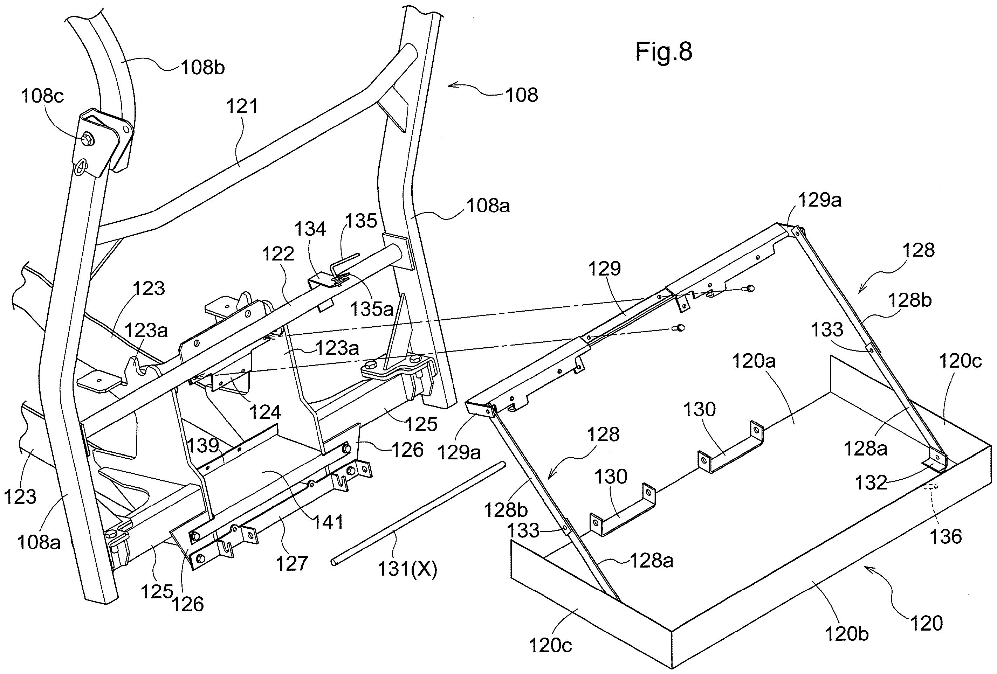

Specifically, as shown in FIGS. 7 and 8, the ROPS 108 includes a pair of left and right vertical support portions 108a parallel to the up-down direction of the traveling chassis, and a horizontal portion 108b spanning between upper portions of the left and right vertical support portions 108a. The horizontal portion 108b is pivotably supported by the left and right vertical support portions 108a via coupling pins 108c. The horizontal portion 108b is supported so as to be capable of being swung up and down with the coupling pins 108c as swing fulcrums between a raised use state in which the horizontal portion 108b extends in a forward-upward direction from the left and right vertical support portions 108a (see FIG. 5) and a lowered storage state in which the horizontal portion 108b is lowered to the front side of the left and right vertical support portions 108a.

As shown in FIGS. 7 and 8, the upper portions of the left and right vertical support portions 108a are coupled to each other by an upper coupling member 121. Intermediate portions of the left and right vertical support portions 108a are coupled to each other by an intermediate coupling member 122. The intermediate portions of the left and right vertical support portions 108a are coupled to upper parts of back portions 123a of the pair of left and right chassis frames 123 by the intermediate coupling member 122. A first support member 124 for supporting the cover 120 is provided at an intermediate portion in the chassis horizontal width direction of the intermediate coupling member 122. Lower portions of the left and right vertical support portions 108a are coupled to the chassis frames 123 by lower coupling members 125 provided to span between the vertical support portions 108a and lower parts of the back portions 123a of the chassis frames 123. The lower coupling members 125 and the back portions 123a of the chassis frames 123 are coupled by means of welding. Reinforcing members 126 for reinforcing the coupling of the lower coupling members 125 to the chassis frames 123 are coupled to the lower coupling members 125 and the back portions 123a of the chassis frames 123. The lower coupling members 125 and the vertical support portions 108a are coupled to each other by coupling bolts. A second support member 127 supporting the cover 120 spans between and is coupled to the left and right reinforcing members 126.

The ROPS 108 is supported by the chassis frames 123 as a result of the left and right vertical support portions 108a being coupled to the back portions 123a of the chassis frames 123 via the intermediate coupling member 122 and the lower coupling members 125.

As shown in FIG. 8, the cover 120 includes a cover body 120a, a near wall 120b that rises from a near edge portion of the cover body 120a, and side walls 120c that rise from left and right lateral edge portions of the cover body 120a. A first coupling member 129 is coupled to near end portions of the cover body 120a via a pair of left and right coupling links 128. A pair of left and right second coupling members 130 are provided at far end portions of the cover body 120a.

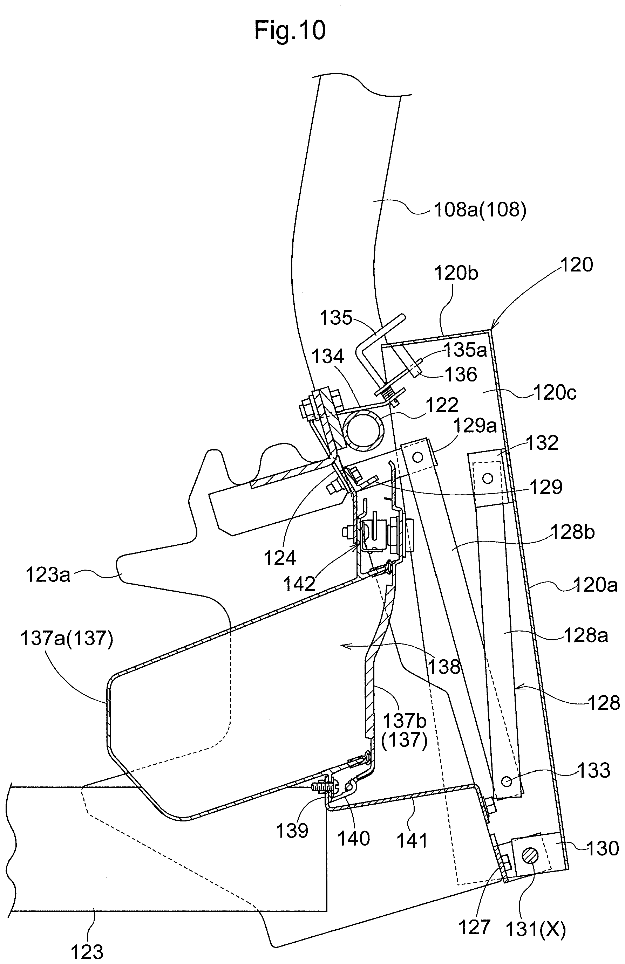

As shown in FIGS. 7 and 10, the first coupling member 129 is coupled to the first support member 124, and the left and right second coupling members 130 are coupled to the second support member 127 via a coupling shaft 131. As shown in FIG. 8, the coupling shaft 131 is constituted by one bar material attached to the pair of left and right second coupling members 130.

The cover 120 is supported by the left and right vertical support portions 108a of the ROPS 108 via the coupling links 128, the first coupling member 129, the first support member 124, the intermediate coupling member 122, the second coupling members 130, the coupling shaft 131, the second support member 127, the reinforcing members 126, and the lower coupling members 125.

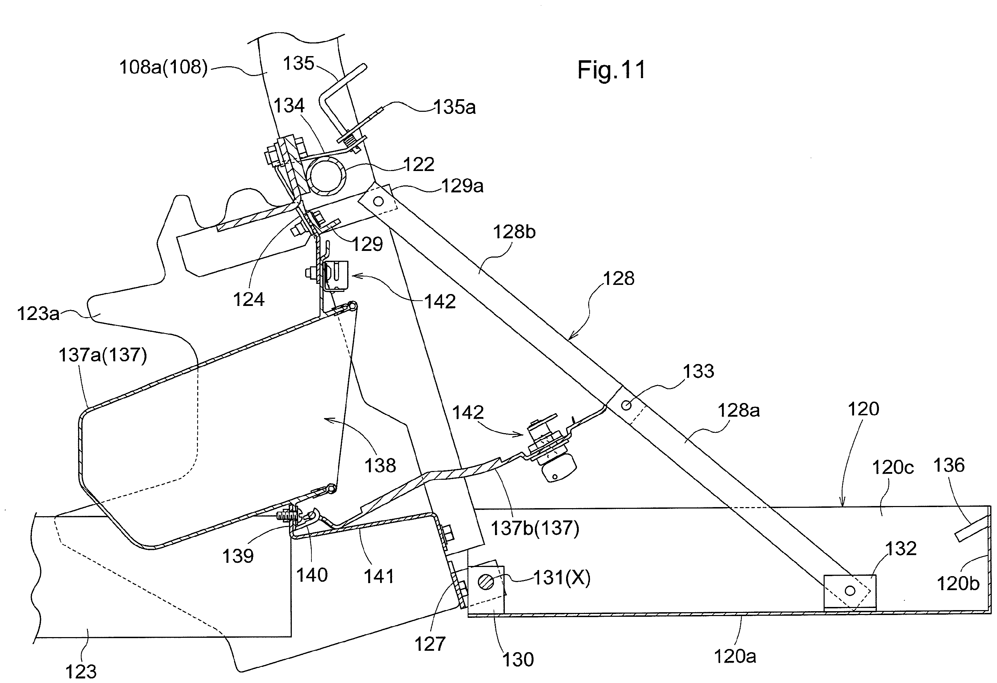

As shown in FIGS. 10 and 11, the second coupling members 130 and the second support member 127 are coupled to each other in a state where the second coupling members 130 can rotate relative to the second support member 127 around a rotation fulcrum that is a pivot axis X of the coupling shaft 131 that extends in the traveling chassis horizontal width direction. As shown in FIGS. 8 and 10, each of the left and right coupling links 128 includes a cover-side link 128a having one end portion that is coupled in a swingable manner to a support portion 132 formed on the cover body 120a, and a ROPS-side link 128b having one end portion that is coupled in a swingable manner to an end portion 129a of the first coupling member 129. The other end portion of the cover-side link 128a and the other end portion of the ROPS-side link 128b are coupled to each other via a coupling pin 133 so as to be capable of relatively swinging relative to each other. The left and right coupling links 128 are configured as bending links that bend as the cover 120 is swung upward and stretch as the cover 120 is swung downward. The cover 120 has the pivot axis X provided at a far end portion, and is supported by the ROPS 108 in a state where the cover 120 can be swung up and down with the pivot axis X serving as a swing fulcrum.

When the cover 120 is swung upward with the pivot axis X serving as a swing fulcrum, and the coupling links 128 enter a bent state as indicated by solid lines in FIG. 5, the cover 120 enters a cover state where the cover 120 covers the space between the left and right back wheels 102 from behind the back wheels 102 as shown in FIGS. 7 and 10. When the cover 120 is in the cover state, cut grass discharged backward of the chassis from the mower device 109 is prevented from dispersing in a backward-upward direction from the space between the left and right back wheels 102 by the cover 120, and gravel bounced up by the back wheels 102 is prevented from entering the driving portion 105 by the cover 120. As shown in FIG. 8, a pin holder 134 is provided on the first coupling member 129, and a lock pin 135 is rotatably supported by the pin holder 134. A positioning portion 136 (see FIGS. 10 and 11) is provided on the near wall 120b of the cover 120. If the lock pin 135 is switched into a working state when the cover 120 is in the cover state, a lock arm 135a extended from the lock pin 135 engages with the positioning portion 136, and the cover 120 is held in the cover state by the lock arm 135a and the lock pin 135. The lock pin 135 is supported by the intermediate coupling member 122 via the pin holder 134, the first coupling member 129, and the first support member 124.

If the cover 120 is swung downward toward the back side of the traveling chassis with respect to the cover state with the pivot axis X serving as a swing fulcrum, and the coupling links 128 enter a stretched state to pull and support the cover 120 as indicated by dash-double dot lines in FIG. 5, the cover 120 enters a table state as indicated by FIG. 11. When the cover 120 is in the table state, articles such as tools used for inspecting the chassis can be placed on the cover 120.

### Configuration of Toolbox According to Second Embodiment

As shown in FIGS. 5, 6, and 7, a toolbox 137 is provided in the front of the cover 120, at a location between the pair of left and right back wheels 102. Tools or the like used for inspecting the chassis can be stored in the toolbox 137.

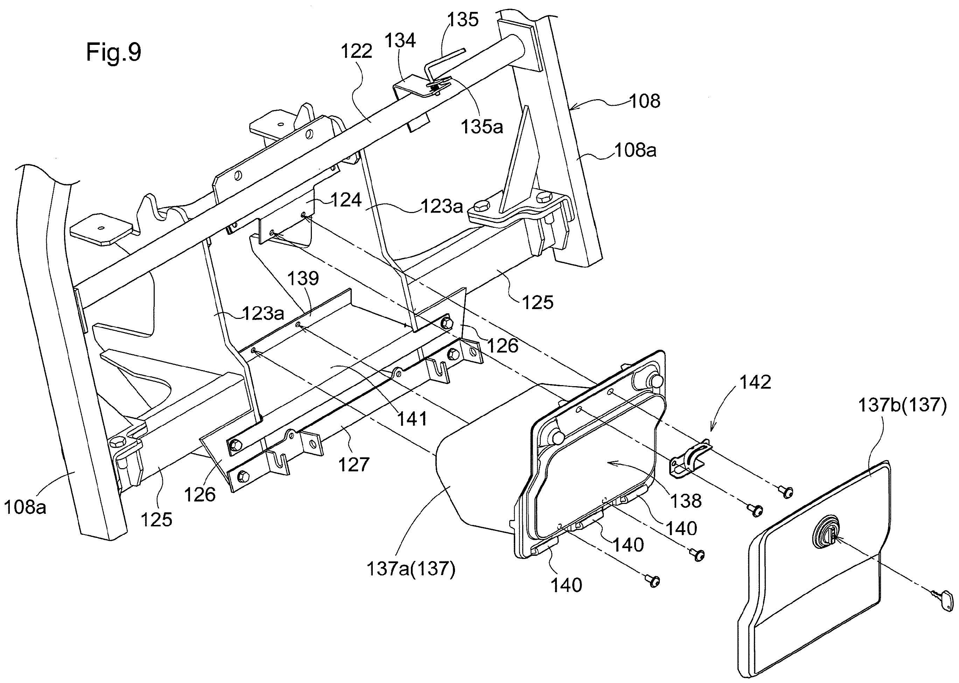

Specifically, as shown in FIG. 9, the toolbox 137 includes a box body 137a and a lid 137b for opening and closing a tool opening 138 in the box body 137a. As shown in FIGS. 10 and 11, the box body 137a is fitted into a space between the back portions 123a of the left and right chassis frames 123 in a state where the tool opening 138 is open backward of the chassis, and is fixed to a support portion 139 provided between the left and right chassis frame 123 and to the first support member 124 provided on the ROPS 108, by coupling screws. As shown in FIGS. 10 and 11, the lid 137b is configured to be supported so as to be capable of being swung to be opened and closed and also being removable, by a lid support portion 140 provided at a lower portion of the box body 137a than the tool opening 138. As shown in FIG. 11, when the lid 137b is opened, the lid 137b is received from below by a lid receiver 141 and held in an open orientation. As shown in FIGS. 10 and 11, a lock mechanism 142 for fixing the lid 137b in the open state is provided, spanning between the lid 137b and a higher portion of the box body 137a than the tool opening 138.

### Variations of Second Embodiment

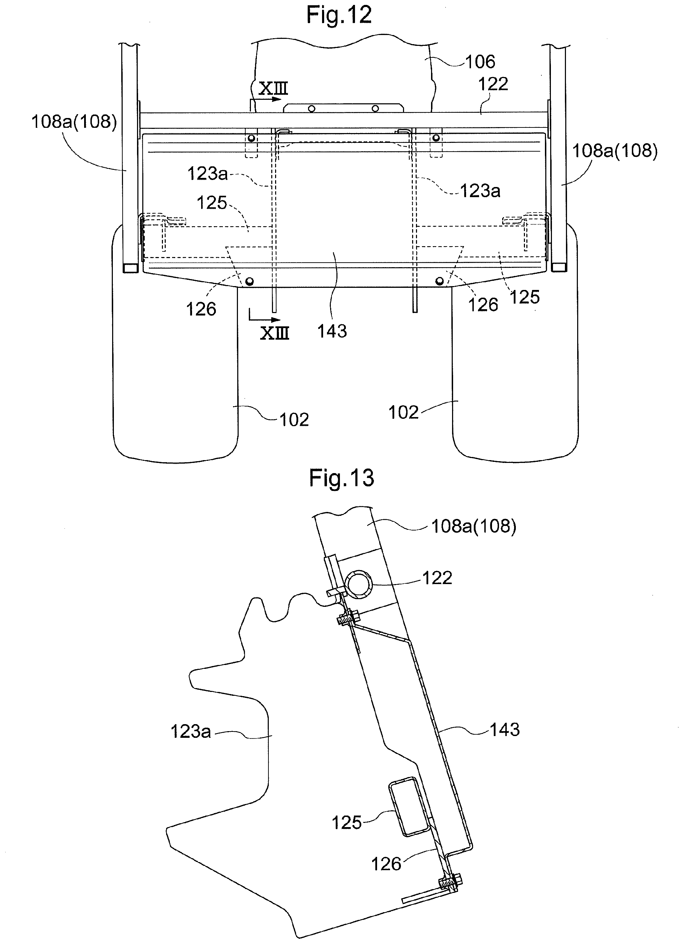

(2-1) FIG. 12 is a back view that shows a cover 143 according to a variation. As shown in FIGS. 12 and 13, the cover 143 according to the variation is supported only in the cover state by the ROPS 108, and cannot be switched to the table state.

(2-2) The above embodiment has described an example in which the cover (120, 143) is supported by the ROPS 108, but a configuration may alternatively be employed in which a dedicated support member for supporting the cover is provided in the traveling chassis, and the cover is supported by the dedicated support member.

(2-3) The above embodiment has described an example in which three rotating blades 115 are provided, but the number of rotating blades may be two or less, or four or more.

The embodiments disclosed in the present specification are examples, and embodiments of the present invention are not limited thereto. The present invention can be modified as appropriate without departing from the objects of the claims.

## Claims

1. A riding grass mower comprising:
a chassis frame (10;111) supported by a pair of left and right front wheels (11;101) and a pair of left and right back wheels (12;102);
a rear discharge type of mower device (4;109) arrangeable underneath the chassis frame (10;111), in a space between the front wheels (11;101) and the back wheels (12;102) in a front-back direction;
the riding grass mower being **characterized by** a duct member (17) located between the pair of left and right back wheels (12;102), behind the mower device (4;109), and capable of guiding cut grass from the mower device (4;109) backward and upward; and
a toolbox (5;137) provided between the pair of left and right back wheels (12;102), behind the mower device (4;109), and inscribed in inner surfaces of a back portion of the duct member (17).

2. The riding grass mower according to claim 1, wherein
the toolbox (5) is located between a pair of left and right main frames (10A) that constitute the chassis frame (10), and is supported so as to be attachable to and removable from the duct member (17).

3. The riding grass mower according to claim 1 or 2, wherein
the toolbox (5) includes a closable opening (56) on a chassis back side, and a lid (5B) for closing the closable opening (56), and
the lid (5B) can be opened and closed from the chassis back side.

4. A riding grass mower according to any one of claims 1 to 3, comprising:
a cover (120, 143) for covering a space between the left back wheel (102) and the right back wheel (102) from behind the back wheels (102).

5. The riding grass mower according to claim 4, wherein
in a back view of the traveling chassis, the cover (120, 143) spans between a traveling-chassis laterally-outer end portion of the left back wheel (102) and a traveling-chassis laterally-outer end portion of the right back wheel (102).

6. The riding grass mower according to claim 4 or 5, further comprising
a ROPS (108) provided behind a driver seat, on the traveling chassis,
wherein the cover (120, 143) is supported by the ROPS (108).

7. The riding grass mower according to claim 6, further comprising
a pair of left and right vertical support portions (108a) provided in the ROPS (108) and parallel to an up-down direction of the traveling chassis,
wherein the cover (120, 143) is supported by the pair of left and right vertical support portions.

8. The riding grass mower according to any one of claims 4 to 7, wherein
the cover (120) has a pivot axis (X) in a direction parallel to a horizontal width direction of the traveling chassis, and is configured to enter a cover state of covering the space from behind the back wheels (102) as a result of being swung upward with the pivot axis serving as a swing fulcrum, and to enter a table state where an article can be placed on the cover (120) as a result of being swung downward toward a chassis back side with respect to the cover state with the pivot axis serving as a swing fulcrum.

9. The riding grass mower according to any one of claims 4 to 8, wherein
the toolbox (137) is between the pair of left and right back wheels (102) forward of the cover (143).

## Patentansprüche

1. Aufsitzrasenmäher, Folgendes umfassend:
ein Fahrgestell (10, 111), getragen von einem Paar aus linkem und rechtem Vorderrad (11, 101) und einem Paar aus linkem und rechtem Hinterrad (12, 102),
eine Mähvorrichtung (4, 109) mit Heckauswurf, die unter dem Fahrgestell (10, 111) in einem Raum zwischen den Vorderrädern (11, 101) und den Hinterrädern (12, 102) in einer Vorn-hinten-Richtung angeordnet werden kann,
wobei der Aufsitzrasenmäher durch ein Kanalelement (17) gekennzeichnet ist, das sich zwischen dem Paar aus linkem und rechtem Hinterrad (12, 102) hinter der Mähvorrichtung (4, 109) befindet und in der Lage ist, geschnittenes Gras von der Mähvorrichtung (4, 109) nach hinten und oben zu führen, und
einen Werkzeugkasten (5, 137), der zwischen dem Paar aus linkem und rechtem Hinterrad (12, 102) hinter der Mähvorrichtung (4, 109) bereitgestellt ist und in Innenflächen eines hinteren Abschnitts des Kanalelements (17) eingesetzt ist.

2. Aufsitzrasenmäher nach Anspruch 1, wobei
sich der Werkzeugkasten (5) zwischen einem Paar aus linkem und rechtem Hauptgestell (10A), welches das Fahrgestell (10) bildet, befindet und derart getragen wird, dass er an dem Kanalelement (17) angebracht und von diesen entfernt werden kann.

3. Aufsitzrasenmäher nach Anspruch 1 oder 2, wobei
der Werkzeugkasten (5) eine verschließbare Öffnung (56) an einer Fahrgestellrückseite und einen Deckel (5B) zum Verschließen der verschließbaren Öffnung (56) beinhaltet, und
der Deckel (5B) von der Fahrgestellrückseite aus geöffnet und geschlossen werden kann.

4. Aufsitzrasenmäher nach einem der Ansprüche 1 bis 3, Folgendes umfassend:
eine Abdeckung (120, 143) zum Abdecken eines Raumes zwischen dem linken Hinterrad (102) und dem rechten Hinterrad (102) von hinter den Hinterrädern (102) aus.

5. Aufsitzrasenmäher nach Anspruch 4, wobei
sich die Abdeckung (120, 143) in Rückansicht des fahrenden Fahrgestells zwischen einem seitlich äußeren Endabschnitt des linken Hinterrades (102) des fahrenden Fahrgestells und einem seitlich äußeren Endabschnitt des rechten Hinterrades (102) des fahrenden Fahrgestells erstreckt.

6. Aufsitzrasenmäher nach Anspruch 4 oder 5, ferner Folgendes umfassend:
einen Überrollschutz (108), der hinter einem Fahrersitz auf dem fahrenden Fahrgestell bereitgestellt ist, wobei die Abdeckung (120, 143) von dem Überrollschutz (108) getragen wird.

7. Aufsitzrasenmäher nach Anspruch 6, ferner Folgendes umfassend:
ein Paar aus linkem und rechtem vertikalem Trageabschnitt (108a), die in dem Überrollschutz (108) und parallel zu einer Oben-unten-Richtung des fahrenden Fahrgestells bereitgestellt sind,
wobei die Abdeckung (120, 143) von dem Paar aus linkem und rechtem vertikalem Trageabschnitt getragen wird.

8. Aufsitzrasenmäher nach einem der Ansprüche 4 bis 7, wobei
die Abdeckung (120) eine Schwenkachse (X) in einer Richtung parallel zu einer horizontalen Breiterichtung des fahrenden Fahrgestells aufweist und dafür konfiguriert ist, als Ergebnis des Aufwärts-Geschwungen-Werdens, wobei die Schwenkachse als ein Schwingdrehpunkt dient, in einen Abdeckungszustand des Abdeckens des Raumes von hinter den Hinterrädern (102) aus einzutreten, und als Ergebnis das Abwärts-Geschwungen-Werdens hin zu einer Fahrgestellrückseite in Bezug auf den Abdeckungszustand, wobei die Schwenkachse als Schwingdrehpunkt dient, in einen Zustand einzutreten, in dem ein Gegenstand auf der Abdeckung (120) platziert werden kann.

9. Aufsitzrasenmäher nach einem der Ansprüche 4 bis 8, wobei
sich der Werkzeugkasten (137) zwischen dem Paar aus linkem und rechtem Hinterrad (102) vor der Abdeckung (143) befindet.

## Revendications

1. Tondeuse autoportée comprenant :
un cadre de châssis (10 ; 111) supporté par une paire de roues avant gauche et droite (11 ; 101) et une paire de roues arrière gauche et droite (12 ; 102) ;
un dispositif de tonte du type à décharge arrière (4 ; 109) pouvant être agencé au-dessous du cadre de châssis (10 ; 111) dans un espace entre les roues avant (11 ; 101) et les roues arrière (12 ; 102) dans une direction avant - arrière ;
la tondeuse autoportée étant **caractérisée par** un élément de conduit (17) situé entre la paire de roues arrière gauche et droite (12 ; 102), derrière le dispositif de tonte (4 ; 109) et pouvant guider l'herbe coupée du dispositif de tonte (4 ; 109) vers l'arrière et vers le haut ; et
une boîte à outils (5 ; 137) prévue entre la paire de roues arrière gauche et droite (12 ; 102), derrière le dispositif de tonte (4 ; 109), et inscrite dans des surfaces internes d'une partie arrière de l'élément de conduit (17).

2. Tondeuse autoportée selon la revendication 1, dans laquelle :
la boîte à outils (5) est positionnée entre une paire de cadres principaux gauche et droit (10A) qui constituent le cadre de châssis (10) et est supportée afin de pouvoir être fixée à et retirée de l'élément de conduit (17).

3. Tondeuse autoportée selon la revendication 1 ou 2, dans laquelle :
la boîte à outils (5) comprend une ouverture refermable (56) sur un côté arrière de châssis, et un couvercle (5B) pour fermer l'ouverture refermable (56), et
le couvercle (5B) peut être ouvert et fermé à partir du côté arrière de châssis.

4. Tondeuse autoportée selon l'une quelconque des revendications 1 à 3, comprenant :
un couvercle (120, 143) pour recouvrir un espace entre la roue arrière gauche (102) et la roue arrière droite (102) depuis le derrière des roues arrière (102).

5. Tondeuse autoportée selon la revendication 4, dans laquelle :
sur une vue arrière du châssis en déplacement, le couvercle (120, 143) s'étend entre une partie d'extrémité latéralement externe de châssis en déplacement de la roue arrière gauche (102) et une partie d'extrémité latéralement externe de châssis en déplacement de la roue arrière droite (102).

6. Tondeuse autoportée selon la revendication 4 ou 5, comprenant en outre :
une ROPS (structure de protection contre le renversement) (108) prévue derrière un siège de conducteur, sur le châssis mobile, le couvercle (120, 143) étant supporté par la ROPS (108).

7. Tondeuse autoportée selon la revendication 6, comprenant en outre :
une paire de parties de support verticales gauche et droite (108a) prévues dans la ROPS (108) et parallèles à une direction de haut en bas du châssis mobile,
dans laquelle le couvercle (120, 143) est supporté par la paire de parties de support verticales gauche et droite.

8. Tondeuse autoportée selon l'une quelconque des revendications 4 à 7, dans laquelle :
le couvercle (120) a un axe de pivot (X) dans une direction parallèle à une direction de largeur horizontale du châssis mobile, et est configuré pour entrer dans un état de couverture pour recouvrir l'espace depuis le derrière des roues arrière (102) du fait d'un mouvement de bascule vers le haut pour lequel l'axe de pivot de point de bascule, et pour entrer dans un état de table dans lequel un article peut être placé sur le couvercle (120) du fait d'un mouvement de bascule vers le bas, pour lequel l'axe de pivot sert de point de bascule, vers le côté arrière de châssis par rapport à l'état de couverture.

9. Tondeuse autoportée selon l'une quelconque des revendications 4 à 8, dans laquelle :
la boîte à outils (137) est entre la paire de roues arrière gauche et droite (102) vers l'avant du couvercle (143).
